# EUROPÄISCHE PATENTSCHRIFT

(11) **EP 4 377 988 B1**
(45) Veröffentlichungstag und Bekanntmachung des Hinweises auf die Patenterteilung: **22.07.2026**
(21) Anmeldenummer: 22786009.5
(22) Anmeldetag: 16.09.2022
(51) Int. Cl.: H01H 71/12, H02H 3/033, H01H 71/04

(54) **SCHUTZSCHALTGERÄT**
CIRCUIT BREAKER
DISJONCTEUR

(30) Priorität: 28.09.2021 DE 102021210820
(43) Veröffentlichungstag der Anmeldung: 05.06.2024
(73) Patentinhaber: Siemens Aktiengesellschaft, 80333 München (DE)
(72) Erfinder: TANNHÄUSER, Marvin, 91353 Hausen (DE); HEINDL, Manfred, 93087 Alteglofsheim (DE); HUSSMANN, Jörg, 92318 Neumarkt (DE)
(74) Vertreter: Siemens Patent Attorneys
(86) Internationale Anmeldenummer: PCT/EP2022/075760
(87) Internationale Veröffentlichungsnummer: WO 2023/052147

(56) Entgegenhaltungen:
- DE-A1- 102019 213 604
- DE-A1- 3 824 116
- US-A1- 2020 365 346

## Beschreibung

Die Erfindung betrifft das technische Gebiet eines Schutzschaltgerätes für einen Niederspannungsstromkreis mit einer elektronischen Unterbrechungseinheit.

Mit Niederspannung sind Spannungen von bis zu 1000 Volt Wechselspannung oder bis zu 1500 Volt Gleichspannung gemeint. Mit Niederspannung sind insbesondere Spannungen gemeint, die größer als die Kleinspannung, mit Werten von 50 Volt Wechselspannung bzw. 60 Volt Gleichspannung, sind.

Mit Niederspannungsstromkreis bzw. -netz oder -anlage sind Stromkreise mit Nennströmen bzw. Bemessungsströmen von bis zu 125 Ampere, spezifischer bis zu 63 Ampere gemeint. Mit Niederspannungsstromkreis sind insbesondere Stromkreise mit Nennströmen bzw. Bemessungsströmen von bis zu 50 Ampere, 40 Ampere, 32 Ampere, 25 Ampere, 16 Ampere oder 10 Ampere gemeint. Mit den genannten Stromwerten sind insbesondere Nenn-, Bemessungs- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch eine Schutzeinrichtung, wie ein Schutzschaltgerät, Leitungsschutzschalter oder Leistungsschalter. Die Nennströme können sich weiter staffeln, von 0,5 A über 1 A, 2 A, 3 A, 4 A, 5 A, 6 A, 7 A, 8 A, 9 A, 10 A, usw. bis 16 A.

Leitungsschutzschalter sind seit langem bekannte Überstromschutzeinrichtungen, die in der Elektroinstallationstechnik in Niederspannungsstromkreisen eingesetzt werden. Diese schützen Leitungen vor Beschädigung durch Erwärmung infolge zu hohen Stromes und/oder Kurzschluss. Ein Leitungsschutzschalter kann den Stromkreis bei Überlast und/oder Kurzschluss selbsttätig abschalten. Ein Leitungsschutzschalter ist ein nicht selbsttätig zurückstellendes Sicherungselement. Leistungsschalter sind, im Gegensatz zu Leitungsschutzschaltern, für Ströme größer als 125 A vorgesehen, teilweise auch schon ab 63 Ampere. Leitungsschutzschalter sind deshalb einfacher und filigraner aufgebaut. Leitungsschutzschalter weisen üblicherweise eine Befestigungsmöglichkeit zur Befestigung auf einer so genannten Hutschiene (Tragschiene, DIN-Schiene, TH35) auf.

Leitungsschutzschalter sind elektromechanisch aufgebaut. In einem Gehäuse weisen sie einen mechanischen Schaltkontakt bzw. Arbeitsstromauslöser zur Unterbrechung (Auslösung) des elektrischen Stromes auf. Üblicherweise wird ein Bimetall-Schutzelement bzw. Bimetall-Element zur Auslösung (Unterbrechung) bei länger anhaltenden Überstrom (Überstromschutz) respektive bei thermischer Überlast (Überlastschutz) eingesetzt. Ein elektromagnetischer Auslöser mit einer Spule wird zur kurzzeitigen Auslösung bei Überschreiten eines Überstromgrenzwerts bzw. im Falle eines Kurzschlusses (Kurzschlussschutz) eingesetzt. Eine oder mehrere Lichtbogenlöschkammer(n) bzw. Einrichtungen zur Lichtbogenlöschung sind vorgesehen. Ferner Anschlusselemente für Leiter des zu schützenden elektrischen Stromkreises.

Schutzschaltgeräte mit einer elektronischen Unterbrechungseinheit sind relativ neuartige Entwicklungen. Diese weisen eine halbleiterbasierte elektronische Unterbrechungseinheit auf. D.h. der elektrische Stromfluss des Niederspannungsstromkreises wird über Halbleiterbauelemente respektive Halbleiterschalter geführt, die den elektrischen Stromfluss unterbrechen bzw. leitfähig geschaltet werden können. Schutzschaltgeräte mit einer elektronischen Unterbrechungseinheit weisen ferner häufig ein mechanisches Trennkontaktsystem auf, insbesondere mit Trennereigenschaften gemäß einschlägigem Normen für Niederspannungsstromkreise, wobei die Kontakte des mechanischen Trennkontaktsystems in Serie zur elektronischen Unterbrechungseinheit geschaltet sind, d.h. der Strom des zu schützenden Niederspannungsstromkreises wird sowohl über das mechanische Trennkontaktsystem als auch über die elektronische Unterbrechungseinheit geführt.

Die deutsche Offenlegungsschrift DE 10 2019 213 604 A1 offenbart ein Schutzschaltgerät, Schutzschaltsystem und Verfahren. Die Erfindung betrifft ein mit einer Serienschaltung eines Halbleiterschalters und eines Trennkontaktsystems ausgestaltetes Schutzschaltgerät bzw. Schutzschaltsystem für einen Niederspannungsstromkreis, bei dem eine Ermittlung der Höhe des Stromes vorgenommen wird. Dabei wird:
- bei einem Einschaltvorgang zuerst das Trennkontaktsystem geschlossen und anschließend der Halbleiterschalter niederohmig,
- bei einem manuellen ersten Ausschaltvorgang der Halbleiterschalter hochohmig und das Trennkontaktsystem bleibt geschlossen,
- bei einem ermittelten Strom, der einen ersten Stromschwellwert für eine erste Zeitspanne überschreitet, wird gemäß dem ersten Ausschaltvorgang der Halbleiterschalter hochohmig und das Trennkontaktsystem bleibt geschlossen,
- bei einem ermittelten Strom, der einen zweiten Stromschwellwert für eine zweite Zeitspanne überschreitet, wird für einen zweiten Ausschaltvorgang der Halbleiterschalter hochohmig und anschließend wird das Trennkontaktsystem geöffnet,
- bei einem ermittelten Strom, der einen dritten Stromschwellwert überschreitet, wird gemäß dem zweiten Ausschaltvorgang der Halbleiterschalter hochohmig und anschließend wird das Trennkontaktsystem geöffnet.

Die amerikanischen Patentanmeldung US 2020/365346 A1 offenbart einen intelligenten Leistungsschalter mit bidirektionalen Halbleiterschaltern. Ein Leistungsschalter umfasst einen bidirektionalen Halbleiterschalter, eine Schaltersteuerschaltung, Strom- und Spannungssensoren und einen Prozessor. Der bidirektionale Halbleiterschalter ist zwischen einem Leitungseingangsanschluss und einem Lastausgangsanschluss des Leistungsschalters angeschlossen und so konfiguriert, dass er in einen eingeschalteten und einen ausgeschalteten Zustand versetzt werden kann. Die Schaltersteuerschaltung steuert den Betrieb des bidirektionalen Schalters. Der Stromsensor ist so konfiguriert, dass er eine Stromstärke erfasst, die in einem elektrischen Pfad zwischen dem Leitungseingangsanschluss und den Lastausgangsanschlüssen fließt, und ein Strommesssignal erzeugt. Der Spannungssensor ist so konfiguriert, dass er eine Spannungsstärke auf dem elektrischen Pfad erfasst und ein Spannungsmesssignal erzeugt. Der Prozessor ist so konfiguriert, dass er die Strom- und Spannungsmesssignale verarbeitet, um Betriebsstatusinformationen des Leistungsschalters, ein Fehlerereignis und Stromverbrauchsinformationen einer an den Lastausgangsanschluss angeschlossenen Last zu bestimmen.

Die deutsche Offenlegungsschrift DE 3824116 A1 offenbart eine Schaltung und Vorrichtung zur geschützten Speisung einer Last mit Hilfe von elektronischen und elektromechanischen Unterbrechern. Eine Abschaltvorrichtung (2, 10) mit Strombegrenzungseigenschaften wird über Fernsteuereinrichtungen (9, 17) in einer sehr kurzen Zeit nach der Sperrung eines elektronischen Schalters (3) geöffnet, der mit ihm in Reihe geschaltet und mit einem Spannungsbegrenzer (8) parallelgeschaltet ist. Durch eine entsprechende Wahl des Begrenzers können in der Schaltung elektronische Unterbrecher vom Typ Niederspannungs-IGBT benutzt werden.

Aufgabe der vorliegenden Erfindung ist es, ein Schutzschaltgerät eingangs genannter Art zu verbessern, insbesondere eine neue, einfache und verbesserte Architektur für ein derartiges Schutzschaltgerät anzugeben.

Diese Aufgabe wird durch ein Schutzschaltgeräte mit den Merkmalen des Patentanspruchs 1 gelöst.

Erfindungsgemäß wird ein Schutzschaltgerät zum Schutz eines elektrischen Niederspannungsstromkreises, insbesondere Niederspannungswechselstromkreises, vorgeschlagen, aufweisend:
- ein Gehäuse mit netzseitigen Anschlüssen und lastseitigen Anschlüssen für den Niederspannungsstromkreis,
- eine, insbesondere zweipolige, mechanische Trennkontakteinheit, die in Serie mit einer, insbesondere einpoligen, elektronischen Unterbrechungseinheit geschaltet ist, wobei die mechanische Trennkontakteinheit den lastseitigen Anschlüssen und die elektronische Unterbrechungseinheit den netzseitigen Anschlüssen zugeordnet ist,
- dass die mechanische Trennkontakteinheit durch ein Öffnen von Kontakten zur Vermeidung eines Stromflusses oder ein Schließen der Kontakte für einen Stromfluss im Niederspannungsstromkreis schaltbar ist,
- dass die elektronische Unterbrechungseinheit durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungsstromkreis schaltbar ist,
- einer Stromsensoreinheit, zur Ermittlung der Höhe des Stromes des Niederspannungsstromkreises,
- einer Steuerungseinheit, die mit der Stromsensoreinheit, der mechanischen Trennkontakteinheit und der elektronischen Unterbrechungseinheit verbunden ist, wobei bei Überschreitung von Strom- oder/und Strom-Zeitgrenzwerten eine Vermeidung eines Stromflusses des Niederspannungsstromkreises initiiert wird.

Erfindungsgemäß wird, insbesondere ein zweipoliges, Schutzschaltgerät vorgeschlagen, wobei die elektronische Unterbrechungseinheit den netzseitigen Anschlüssen zugeordnet ist, d.h. im Normalfall ständig mit Energie versorgt wird / an der Spannung liegt, und die mechanische Trennkontakteinheit den lastseitigen Anschlüssen zugeordnet ist, d.h. nur zu einer Last den Stromfluss unterbricht wobei das Schutzschaltgerät weiter mit Energie versorgt wird.

Dies hat den Vorteil, dass das Schutzschaltgerät sofort einsatzfähig ist und auch nach einer Abschaltung einer Last Kommunikations- und weitere Funktionen übernehmen kann.

Die Erfindung umfasst, dass die netzseitigen Anschlüsse einen netzseitigen Neutralleiteranschluss und einen netzseitigen Phasenleiteranschluss aufweisen. Die lastseitigen Anschlüsse umfassen einen lastseitigen Neutralleiteranschluss und einen lastseitigen Phasenleiteranschluss.

Dies hat den besonderen Vorteil, dass eine zweipolige Realisierung bzw. zweipolige galvanische Trennung gegeben ist.

Vorteilhafte Ausgestaltungen der Erfindung sind in den Unteransprüchen und im Ausführungsbeispiel angegeben.

In einer vorteilhaften Ausgestaltung der Erfindung ist ein Netzteil vorgesehen, das mit den netzseitigen Anschlüssen verbunden ist bzw. verbindbar ist. Das Netzteil ist mit der Steuerungseinheit verbunden, um eine Energieversorgung zur Verfügung zu stellen.

Dies hat den besonderen Vorteil, dass das Schutzschaltgerät im Normalfall ständig mit Energie versorgt wird, sodass ein im Normalfall ständiger Betrieb ermöglicht wird.

In einer vorteilhaften Ausgestaltung der Erfindung weist die Verbindung zwischen Netzteil und den netzseitigen Anschlüssen eine Sicherung oder/und einen Schalter auf.

Dies hat den besonderen Vorteil, dass das Netzteil bzw. die Steuerungseinheit abgeschaltet werden kann, z.B. für Isolationsmessungen. Ferner kann das Netzteil bzw. die Steuerungseinheit abgesichert werden, um eine erhöhte Sicherheit des Schutzschaltgerätes gegen weitere Fehler zu erreichen.

In einer vorteilhaften Ausgestaltung der Erfindung ist der lastseitige Neutralleiteranschluss und der lastseitigen Phasenleiteranschluss mit der mechanischen Trennkontakteinheit verbunden. In einer vorteilhaften Ausgestaltung der Erfindung ist die elektronische Unterbrechungseinheit mit dem netzseitigen Phasenleiteranschluss verbunden.

Dies hat den besonderen Vorteil, dass ein mechanisch zweipolig galvanisch trennendes und elektronisch einpolig schützendes Schutzschaltgerät gegeben ist, wobei die elektronische Unterbrechungseinheit vorteilhaft im Strompfad des Phasenleiters bzw. Phasenleiter(strom)pfad angeordnet ist (und dass hier vorteilhaft auch die Höhe des Stromes ermittelt wird). Dies reduziert den Aufwand und schafft ein sicher unterbrechendes, auf der technologischen Höhe der Zeit stehendes und dennoch eine einfache Architektur aufweisendes Schutzschaltgerät.

In einer vorteilhaften Ausgestaltung der Erfindung ist der lastseitige Neutralleiteranschluss und der lastseitigen Phasenleiteranschluss, insbesondere ausschließlich, mit der mechanischen Trennkontakteinheit verbunden, so dass bei geöffneten Kontakten der mechanischen Trennkontakteinheit die lastseitigen Anschlüsse galvanische getrennt von den anderen unter Spannung stehenden Einheiten des Schutzschaltgerätes und den netzseitigen Anschlüssen sind.

Dies hat den besonderen Vorteil, dass eine sichere elektrische galvanische Trennung zu allen gegebenenfalls unter Spannung, insbesondere größer als (Schutz-)Kleinspannung, stehenden Einheiten bzw. Komponenten des Schutzschaltgerätes gegeben ist. Damit kann sichergestellt werden, dass die lastseitigen Anschlüsse bei geöffneten Kontakten garantiert spannungsfrei sind. Somit stellt auf Grund dieser neuartigen Architektur ein elektronisches Schutzschaltgerät eine erhöhte Sicherheit zur Verfügung, mit der eine erhöhte Sicherheit im Niederspannungsstromkreises bereitgestellt wird. Es wird eine mindestens genauso hohe Sicherheit wie bei konventionellen Schutzschaltgeräten erreicht.

In einer vorteilhaften Ausgestaltung der Erfindung weist die mechanische Trennkontakteinheit eine Handhabe zum manuellen Öffnen und Schließen der Kontakte auf.

Insbesondere zeigt die Handhabe eine Stellung der Kontakte an. Im Normalfall stimmt die Stellung der Handhabe mit der Stellung der Kontakte überein. Ausnahmen wären hier beispielsweise verklebte Kontakte oder dass bei einem Öffnungsvorgang der Kontakte die Handhabe blockiert wird (Freiauslösung), bei der der Öffnungsvorgang der Kontakte primär ist und dem manuellen Schließvorgang mittels der Handhabe vorgeht.

Dies hat den besonderen Vorteil, dass ein Schutzschaltgerät Gerät gemäß klassischen Leitungsschutzschaltern gegeben ist.

In einer vorteilhaften Ausgestaltung der Erfindung ist die mechanische Trennkontakteinheit derart ausgestaltet, dass die Kontakte von der Steuerungseinheit geöffnet, aber nicht geschlossen werden können. Insbesondere können die Kontakte der mechanischen Trennkontakteinheit auch bei blockierter Handhabe geöffnet werden (dies wird als so genannte Freiauslösung bezeichnet.

Dies hat den besonderen Vorteil, dass eine erhöhte Betriebssicherheit erreicht wird, da die Kontakte versehentlich durch die Steuerungseinheit nicht geschlossen werden können, ferner insbesondere nicht blockiert werden können, so dass sicher abgeschaltet wird.

In einer vorteilhaften Ausgestaltung der Erfindung ist die mechanische Trennkontakteinheit derart ausgestaltet, dass nur bei Anliegen eines Freigabesignals (insbesondere von der Steuerungseinheit) ein Schließen der Kontakte durch die Handhabe möglich ist.

Dies hat den besonderen Vorteil, dass eine erhöhte Betriebssicherheit im Stromkreis bzw. des Schutzschaltgerätes erreicht wird, da nur ein funktionsfähiges Schutzschaltgerät ein (manuelles) Schließen des Kontaktes ermöglicht.

In einer vorteilhaften Ausgestaltung der Erfindung ist die mechanische Trennkontakteinheit derart ausgestaltet, dass eine Positionsinformation über den geschlossenen oder geöffneten Zustand der Kontakte zur Verfügung steht. Insbesondere kann ein Positionssensor vorgesehen sein. Insbesondere wird die Positionsinformation von der Steuerungseinheit erfasst. Dies hat den besonderen Vorteil, dass die Steuerungseinheit den Schaltzustand der mechanischen Trennkontakteinheit erfassen kann.

In einer vorteilhaften Ausgestaltung der Erfindung ist die mechanische Trennkontakteinheit derart ausgestaltet, dass eine mechanische Anzeige der Position der Kontakte (offen oder geschlossen) vorgesehen ist, insbesondere, dass diese versorgungsspannungsunabhängig ist.

Dies hat den besonderen Vorteil, dass eine versorgungsspannungsunabhängige Kontaktstellungsanzeige gegeben ist.

In einer vorteilhaften Ausgestaltung der Erfindung ist die mechanische Trennkontakteinheit derart ausgestaltet, dass mehrere Kontakte der mechanischen Trennkontakteinheit miteinander (mechanisch) gekoppelt sind.

Dies hat den besonderen Vorteil, dass gegebenenfalls eine Spannungsverschleppung vermieden wird.

In einer vorteilhaften Ausgestaltung der Erfindung ist das Schutzschaltgerät derart ausgestaltet, dass die Verbindung zwischen Netzteil und den netzseitigen Anschlüssen einen geringeren Leitungsquerschnitt bzw. eine geringere Stromtragfähigkeit aufweist als die Leiter bzw. Hauptstrompfade für den Niederspannungsstromkreis durch das Schutzschaltgerät (im Gehäuse).

Dies hat den besonderen Vorteil, dass durch die geringere Stromtragfähigkeit die Sicherheit gegen einen innerhalb des elektronischen Teils bzw. elektronischen Einheiten möglicherweise auftretenden Kurzschluss, z.B. auf Seiten des Netzteils bzw. der Steuerungseinheit, wobei der Kurzschlussstrom bzw. Überstrom über diese Verbindung mit geringerer Stromtragfähigkeit (zum Netzteil) fließen muss, verbessert wird.

In einer vorteilhaften Ausgestaltung der Erfindung ist die elektronische Unterbrechungseinheit eine einpolige elektronische Unterbrechungseinheit, die insbesondere im Phasenleiterstrompfad vorgesehen ist.

Dies hat den besonderen Vorteil, dass durch die Einpoligkeit der Aufwand reduziert wird und gleichzeitig, bei Anordnung im Phasenleiterstrompfad, sowohl eine Überwachung für Überströme, Kurzschlussströme als auch für Erdfehlerströme im Niederspannungsstromkreis ermöglicht wird.

In einer vorteilhaften Ausgestaltung der Erfindung ist eine erste Spannungssensoreinheit vorgesehen, zur Ermittlung der Höhe der Spannung über den Anschlüssen der elektronischen Unterbrechungseinheit (EU) eines Strompfades.

Dies hat den besonderen Vorteil, dass mit der Ermittlung der Höhe der Spannung über der elektronischen Unterbrechungseinheit die Ermittlung der Funktionsfähigkeit, insbesondere Schaltfähigkeit, der elektronischen Unterbrechungseinheit vorteilhaft einfach unterstützt werden kann. Es wird somit eine erhöhte Betriebssicherheit eines Schutzschaltgerätes, da eine fehlerhafte elektronische Unterbrechungseinheit einfach ermittelt und gegebenenfalls das Schutzschaltgerät unterbrechen kann, erzielt.

In einer vorteilhaften Ausgestaltung der Erfindung ist eine zweite Spannungssensoreinheit vorgesehen, zur Ermittlung der Höhe der Spannung an den netzseitigen Anschlüssen, insbesondere zwischen netzseitigen Neutralleiteranschluss und netzseitigen Phasenleiteranschluss.

Dies hat den besonderen Vorteil, dass die Spannung des netzseitigen Anschlusses überwacht werden kann und gegebenenfalls bei Über- oder Unterspannungen der Stromkreis getrennt werden kann. Somit unterstützt die erfindungsgemäße Architektur eine erhöhte Betriebssicherheit des Schutzschaltgerätes bzw. im Stromkreis. Des Weiteren kann der Schaltzeitpunkt der elektronischen Unterbrechungseinheit in Abhängigkeit des gemessenen Momentanwertes oder Phasenwinkels der Spannung an den netzseitigen Anschlüssen erfolgen.

In einer vorteilhaften Ausgestaltung der Erfindung ist eine mit der Steuerungseinheit verbundene Anzeigeeinheit vorgesehen.

Dies hat den besonderen Vorteil, dass eine an Anzeige von Statusinformationen des Schutzschaltgerätes ermöglicht wird.

Insbesondere wird der Schaltzustand (hochohmig, niederohmig) der elektronischen Unterbrechungseinheit angezeigt.

In einer vorteilhaften Ausgestaltung der Erfindung ist eine mit der Steuerungseinheit verbundene Kommunikationseinheit vorgesehen.

Dies hat den besonderen Vorteil, dass eine Kommunikation von Statusinformationen zu anderen Schutzschaltgeräten oder einem übergeordneten Managementsystem ermöglicht wird.

In einer vorteilhaften Ausgestaltung der Erfindung ist eine Temperatursensoreinheit vorgesehen, insbesondere zur Ermittlung der Temperatur der elektronischen Unterbrechungseinheit. Die Temperatursensoreinheit kann mit der elektronischen Unterbrechungseinheit oder/und Steuerungseinheit verbunden sein.

Dies hat den besonderen Vorteil, dass ein weiterer Schutz gegen Überhitzung und in der Folge durchbrennen der halbleiterbasierten Schaltelemente der elektronischen Unterbrechungseinheit gegeben ist. Ferner kann eine erhöhte Stromtragfähigkeit erzielt werden.

Bei Überschreitung mindestens eines Temperaturgrenzwertes kann eine Unterbrechung des Strompfades/Phasenleiterpfades erfolgen.

In einer vorteilhaften Ausgestaltung der Erfindung ist ein mit der Steuerungseinheit verbundener Differenzstromsensor vorgesehen, der einen Differenzstrom der beiden Leitern (Phasenleiter und Neutralleiter) im Niederspannungsstromkreis erfasst.

Dies hat den besonderen Vorteil, dass das Schutzschaltgerät auch eine Fehlerstromüberwachung (Differenzstromüberwachung) aufweist und somit eine weitere Funktionalität hat.

In einer vorteilhaften Ausgestaltung der Erfindung ist die Stromsensoreinheit strompfadseitig zwischen netzseitigen Phasenleiteranschluss und lastseitigen Phasenleiteranschluss vorgesehen ist.

Dies hat den besonderen Vorteil, dass durch die Anordnung im Phasenleiterstrompfad sowohl eine Überwachung für Überströme, Kurzschlussströme als auch für Erdfehlerströme im Niederspannungsstromkreis ermöglicht wird.

In einer vorteilhaften Ausgestaltung der Erfindung ist das Schutzschaltgerät derart ausgestaltet, dass das Schutzschaltgerät im inneren des Gehäuses im Wesentlichen mindestens zweiteilig aufgebaut.

In einer vorteilhaften Ausgestaltung der Erfindung weist das Schutzschaltgerät einen elektronischen ersten Teil auf, der insbesondere mindestens eine Leiterplatte aufweist, speziell eine oder zwei Leiterplatten aufweist, auf der insbesondere die Steuerungseinheit, die zweite Spannungssensoreinheit, die Stromsensoreinheit, das Netzteil, die elektronische Unterbrechungseinheit, die Temperatursensoreinheit und gegebenenfalls die erste Spannungssensoreinheit oder/und die Messimpedanz vorgesehen sind.

In einer vorteilhaften Ausgestaltung der Erfindung mit zwei Leiterplatten weist eine erste Leiterplatte eine hohe Stromtragfähigkeit auf, die sich an der Höhe des Stromes des Niederspannungsstromkreis orientiert, und die speziell den Phasenleiterstrom trägt bzw. über die der Phasenleiterstrom geführt wird. Diese erste Leiterplatte weist insbesondere die elektronische Unterbrechungseinheit und den Stromsensoreinheit auf. Gegebenenfalls die erste oder/und zweite Spannungssensoreinheit.

Die zweite Leiterplatte weist insbesondere die Steuerungseinheit auf, insbesondere einen Mikrocontroller auf, und hat in Normalfall eine geringere Stromtragfähigkeit. Auf dieser kann ferner die Kommunikationseinheit oder/und Anzeigeeinheit vorgesehen sein.

In einer vorteilhaften Ausgestaltung der Erfindung weist der elektronische erste Teil nur drei elektrisch leitende Anschlüsse für den Niederspannungsstromkreis auf.

Dies hat den besonderen Vorteil, dass gezielt verschiedene Leiterplattentechnologien, wie Flex-Leiterplatten, Dickkupfer-Leiterplatten, Standard-Mikrocontroller-Leiterplatten, Leiterplatten mit höheren bzw. niedrigeren Kupferanteil bzw. mit mehreren Innenlagen, etc., gezielt eingesetzt werden können, um die Konstruktion einfacher und flexibler zu gestalten und Produktionskosten zu senken.

In einer vorteilhaften Ausgestaltung der Erfindung ist der Niederspannungsstromkreis ein Dreiphasenwechselstromkreis und das Schutzschaltgerät weitere netzseitige und lastseitige Phasenleiteranschlüsse aufweist, zwischen denen jeweils eine Serienschaltung einer elektronischen Unterbrechungseinheit und eines Kontaktes der mechanischen Trennkontakteinheit vorgesehen ist. Weitere Einheiten, wie insbesondere Stromsensoreinheiten, erste oder/und zweite Spannungssensoreinheiten können in analoger Weise vorgesehen sein. Dies hat den besonderen Vorteil, dass eine Lösung für Dreiphasenwechselstromkreise gegeben ist.

In einer vorteilhaften Ausgestaltung der Erfindung wird:
bei geschlossenen Kontakten der mechanischen Trennkontakteinheit und niederohmiger Unterbrechungseinheit und
- bei einem ermittelten Strom, der einen ersten Stromwert überschreitet, insbesondere dass der erste Stromwert für eine erste Zeitgrenze überschritten wird, die elektronische Unterbrechungseinheit hochohmig und die mechanische Trennkontakteinheit geschlossen bleibt,
- bei einem ermittelten Strom, der einen zweiten Stromwert für eine zweite Zeitgrenze überschreitet, die elektronische Unterbrechungseinheit hochohmig wird und die mechanische Trennkontakteinheit geöffnet wird,
- bei einem ermittelten Strom, der einen dritten Stromwert überschreitet, die elektronische Unterbrechungseinheit hochohmig wird und die mechanische Trennkontakteinheit geöffnet wird.

Dies hat den besonderen Vorteil, dass ein abgestuftes Abschaltkonzept für das erfindungsgemäße Schutzschaltgerät gegeben ist.

In einer vorteilhaften Ausgestaltung der Erfindung weist die Steuerungseinheit einen Mikrocontroller auf.

Dies hat den besonderen Vorteil, dass die erfindungsgemäßen Funktionen zur Erhöhung der Sicherheit eines Schutzschaltgerätes bzw. des zu schützenden elektrischen Niederspannungsstromkreis durch ein (anpassbares) Computerprogrammprodukt realisiert werden können. Ferner können Änderungen und Verbesserungen der Funktion dadurch individuell auf ein Schutzschaltgerät geladen werden.

Alle Ausgestaltungen, sowohl in abhängiger Form rückbezogen auf den Patentanspruch 1, als auch rückbezogen lediglich auf einzelne Merkmale oder Merkmalskombinationen von Patentansprüchen, bewirken eine Verbesserung eines Schutzschaltgerätes, insbesondere eine neue Architektur und Verbesserung der Sicherheit eines Schutzschaltgerätes bzw. des elektrischen Stromkreises, und stellen ein neues Konzept für ein Schutzschaltgerät bereit.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit der Zeichnung näher erläutert werden.

Dabei zeigt die Zeichnung:
Figur 1 eine erste Prinzipdarstellung eines Schutzschaltgerätes,
Figur 2 eine zweite Prinzipdarstellung eines Schutzschaltgerätes.

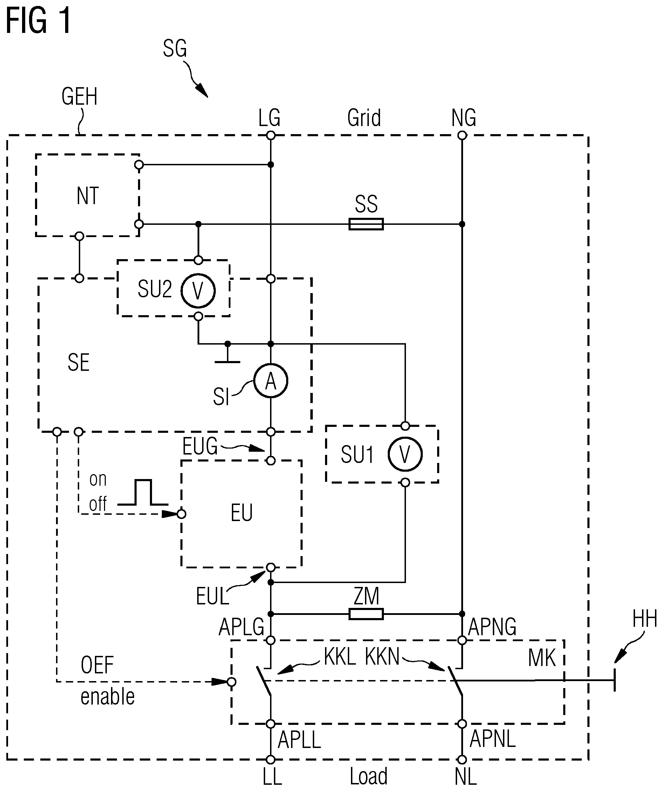

Figur 1 zeigt eine Darstellung eines Schutzschaltgerätes SG zum Schutz eines elektrischen Niederspannungsstromkreises, insbesondere Niederspannungswechselstromkreis, mit einem Gehäuse GEH, aufweisend:
- netzseitige Anschlüsse, die i.B. einen netzseitigen Neutralleiteranschluss NG und einen netzseitigen Phasenleiteranschluss LG umfassen,
- lastseitige Anschlüsse, die i.B. einen lastseitigen Neutralleiteranschluss NL und einen lastseitigen Phasenleiteranschluss LL umfassen,
- die Anschlüsse sind für den Niederspannungsstromkreis vorgesehen;
- an den netzseitige Anschlüssen / der Netzseite GRID ist üblicherweise eine Energiequelle angeschlossen,
- an den lastseitige Anschlüssen / der Lastseite LOAD ist üblicherweise ein Verbraucher angeschlossen;
- eine (zweipolige) mechanische Trennkontakteinheit MK mit lastseitigen Anschlusspunkten APLL, APNL und netzseitigen Anschlusspunkten APLG, APNG,

wobei für den Neutralleiter ein lastseitiger Anschlusspunkt APNL, für den Phasenleiter ein lastseitiger Anschlusspunkt APLL, für den Neutralleiter ein netzseitiger Anschlusspunkt APNG, für den Phasenleiter ein netzseitiger Anschlusspunkt APLG vorgesehen ist. Die lastseitigen Anschlusspunkte APNL, APLL sind mit den lastseitigen Neutral- und Phasenleiteranschlüssen NL, LL verbunden, so dass ein Öffnen von Kontakten KKN, KKL zur Vermeidung eines Stromflusses oder ein Schließen der Kontakte für einen Stromfluss im Niederspannungsstromkreis schaltbar ist,
   - eine, insbesondere einpolige, elektronische Unterbrechungseinheit EU, (die bei einpoliger Ausführung insbesondere im Phasenleiter angeordnet ist,)
mit einem netzseitigen Verbindungspunkt EUG, der mit dem netzseitigen Phasenleiteranschluss LG in elektrischer Verbindung steht, und
einem lastseitigen Verbindungspunkt EUL, der mit dem netzseitigen Anschlusspunkt APLG der mechanischen Trennkontakteinheit MK in elektrischer Verbindung steht bzw. verbunden ist, wobei die elektronische Unterbrechungseinheit EU durch (nicht dargestellte) halbleiterbasierte Schaltelemente einen hochohmigen Zustand der Schaltelemente zur Vermeidung eines Stromflusses oder einen niederohmigen Zustand der Schaltelemente zum Stromfluss im Niederspannungsstromkreis aufweist bzw. schaltbar ist,
   - eine Stromsensoreinheit SI, zur Ermittlung der Höhe des Stromes des Niederspannungsstromkreises, die insbesondere im Strompfad des Phasenleiter bzw. Phasenleiterstrompfad angeordnet ist,
   - einer Steuerungseinheit SE, die mit der Stromsensoreinheit SI, der mechanischen Trennkontakteinheit MK und der elektronischen Unterbrechungseinheit EU verbunden ist, wobei bei Überschreitung von Strom- oder/und Strom-Zeitgrenzwerten eine Vermeidung eines Stromflusses des Niederspannungsstromkreises initiiert wird.

Die die mechanische Trennkontakte Einheit MK ist erfindungsgemäß lastseitige angeordnet, die elektronische Unterbrechungseinheit EU ist erfindungsgemäß netzseitig angeordnet. Die Netzseite GRID mit der Energiequelle steht im Normalfall unter elektrischer Spannung. An der Lastseite LOAD ist üblicherweise ein elektrischer Verbraucher angeschlossen.

Dies hat den Vorteil, dass sich keine weiteren (insbesondere unter Spannung stehenden) Teile bzw. Komponenten zwischen den Kontakten der mechanischen Trennkontakteinheit / lastseitigen Anschlusspunkten (APLL, APNL) der mechanischen Trennkontakteinheit und den beiden lastseitigen Anschlüssen (LL, NL) befinden. So kann auf Grund dieser Architektur bzw. Konstruktion sichergestellt werden, dass bei geöffneten Kontakten KKL, KKN in keinem Fall eine Spannung an den lastseitigen Anschlüssen LL, NL ansteht. Hierdurch wird die Sicherheit des Schutzgerätes erhöht.

Im Gegensatz dazu befinden sich bei anderen Architekturen, bei denen die mechanische Trennkontakteinheit netzseitig angeordnet, vor dem lastseitigen Anschluss häufig elektronische Einheiten.

Erfindungsgemäß kann das Schutzschaltgerät derart ausgestaltet, dass vorteilhaft die Höhe der Spannung über der elektronischen Unterbrechungseinheit ermittelbar ist. D.h. die Höhe einer ersten Spannung zwischen netzseitigen Verbindungspunkt EUG und lastseitigen Verbindungspunkt EUL der elektronischen Unterbrechungseinheit EU ist ermittelbar bzw. wird ermittelt.

Hierzu ist im Beispiel gemäß Figur 1 eine mit der Steuerungseinheit SE verbundene erste Spannungssensoreinheit SU1 vorgesehen, die die Höhe der Spannung zwischen netzseitigen Verbindungspunkt EUG und lastseitigen Verbindungspunkt EUL der elektronischen Unterbrechungseinheit EU ermittelt.

Bei der Spannungsmessung durch die erste Spannungssensoreinheit SU1 kann alternativ auch die Spannung über der Serienschaltung von elektronischer Unterbrechungseinheit EU und Stromsensor SI ermittelt werden, wie in Figur 1 dargestellt. Die Stromsensoreinheit SI weist einen sehr geringen Innenwiderstand auf, so dass die Ermittlung der Höhe der Spannung nicht oder vernachlässigbar beeinträchtigt wird.

Vorteilhafterweise kann eine zweite Spannungssensoreinheit SU2 vorgesehen ist, die die Höhe der Spannung zwischen netzseitigen Neutralleiteranschluss NG und netzseitigen Phasenleiteranschluss LG ermittelt.

Die erste Spannungssensoreinheit kann auch ersetzt werden, in dem zwei Spannungsmessungen (vor der elektronischen Unterbrechungseinheit und nach der elektronischen Unterbrechungseinheit) verwendet werden. Durch eine Differenzbildung wird die Spannung über der elektronischen Unterbrechungseinheit ermittelt.

So kann eine/die mit der Steuerungseinheit SE verbundene zweite Spannungssensoreinheit SU2 vorgesehen sein, die die Höhe einer zweiten Spannung zwischen netzseitigen Neutralleiteranschluss NG und netzseitigen Phasenleiteranschluss LG ermittelt. Ferner kann eine mit der Steuerungseinheit verbundene (nicht dargestellte) dritte Spannungssensoreinheit SU3 vorgesehen sein, die die Höhe einer dritten Spannung zwischen netzseitigen Neutralleiteranschluss NG und lastseitigen Verbindungspunkt EUL der elektronischen Unterbrechungseinheit EU ermittelt. Das Schutzschaltgerät ist derart ausgestaltet, dass aus der Differenz zwischen zweiter und dritter Spannung die Höhe einer/der ersten Spannung zwischen netzseitigen Verbindungspunkt EUG und lastseitigen Verbindungspunkt EUL der elektronischen Unterbrechungseinheit EU ermittelt wird.

Zwischen den netzseitigen Anschlusspunkten APLG, APNG der mechanischen Trennkontakteinheit MK kann eine Messimpedanz ZM geschaltet. Die Messimpedanz ZM kann beispielsweise ein elektrischer Widerstand oder/und Kondensator sein. Die Messimpedanz kann ferner eine Induktivität sein. Insbesondere kann die Messimpedanz eine Serienschaltung oder Parallelschaltung eines Widerstandes oder/und Kondensator oder/und Induktivität sein.

Im Beispiel gemäß Figur 1 ist die elektronische Unterbrechungseinheit EU einpolig ausgeführt, im Beispiel im Phasenleiter. Hierbei ist der netzseitige Anschlusspunkt APNG für den Neutralleiter der mechanischen Trennkontakteinheit MK mit den netzseitigen Neutralleiteranschluss NG des Gehäuses GEH verbunden.

Das Schutzschaltgerät SG ist vorteilhaft derart ausgestaltet, dass die Kontakte der mechanischen Trennkontakteinheit MK durch die Steuerungseinheit SE geöffnet, aber nicht geschlossen werden können, was durch einen Pfeil von der Steuerungseinheit SE zur mechanischen Trennkontakte Einheit MK angedeutet ist.

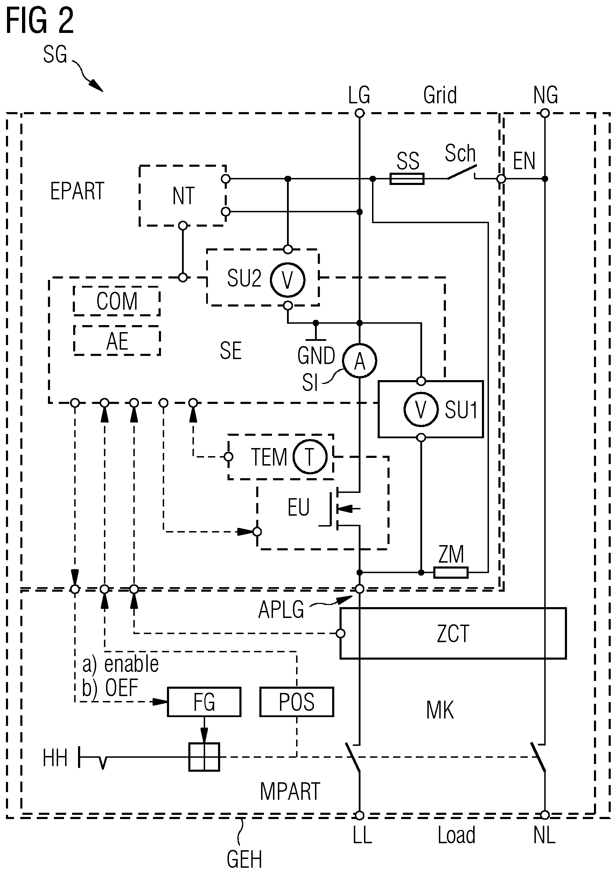

Die mechanische Trennkontakteinheit MK ist durch eine mechanische Handhabe HH am Schutzschaltgerät SG bedienbar, um ein manuelles (händisches) Öffnen oder ein Schließen der Kontakte KKL, KKN zu schalten. Die mechanische Handhabe HH zeigt den Schaltzustand (Offen oder Geschlossen) der Kontakte der mechanischen Trennkontakteinheit MK am Schutzschaltgerät an. Des Weiteren kann die Kontaktstellung (bzw. die Position der Handhabe, geschlossen bzw. geöffnet) an die Steuerungseinheit SE übermittelbar sein. Die Kontaktstellung (bzw. die Position der Handhabe) kann z.B. mittels eines Sensors ermittelt werden, wie einem Positionssensor. Die Kontaktstellung bzw. der Schaltzustand kann zur Steuerungseinheit SE übermittelt werden. Der Positionssensor kann ein Teil der mechanischen Trennkontakteinheit MK sein. Alternativ kann der Positionssensor eine Komponente im elektronischen ersten Teil (EPART, Figur 2) sein. Z.B. kann im elektronischen ersten Teil (EPART) ein Hallsensor vorgesehen werden, der die Stellung der Kontakte oder/und der Handhabe berührungslos erfasst und übermittelt.

Die mechanische Trennkontakteinheit MK ist vorteilhaft derart ausgestaltet, dass ein (manuelles) Schließen der Kontakte durch die mechanische Handhabe erst nach einer Freigabe (Enable), insbesondere einem Freigabesignal, möglich ist. Dies ist ebenfalls durch den Pfeil von der Steuerungseinheit SE zur mechanischen Trennkontakte Einheit MK angedeutet. D. h., die Kontakte KKL, KKN der mechanischen Trennkontakteinheit MK können durch die Handhabe HH erst bei Vorliegen der Freigabe bzw. des Freigabesignals (von der Steuerungseinheit) geschlossen werden. Ohne die Freigabe bzw. das Freigabesignal kann die Handhabe HH zwar betätigt, die Kontakte aber nicht geschlossen werden ("Dauerrutscher").

Das Schutzschaltgerät SG weist eine Energieversorgung bzw. Netzteil NT, beispielsweise ein Schaltnetzteil, auf. Insbesondere ist die Energieversorgung / Netzteil NT für die Steuerungseinheit SE vorgesehen, was durch eine Verbindung zwischen Energieversorgung / Netzteil NT und Steuerungseinheit SE in Figur 1 angedeutet ist. Die Energieversorgung / Netzteil NT ist (andererseits) mit dem netzseitigen Neutralleiteranschluss NG und dem netzseitigen Phasenleiteranschluss LG verbunden. In die Verbindung zum netzseitigen Neutralleiteranschluss NG (oder/und Phasenleiteranschluss LG) kann vorteilhaft eine Sicherung SS, insbesondere Schmelzsicherung, oder ein Schalter SCH (Figur 2) vorgesehen sein.

Das Netzteil NT ist erfindungsgemäß im Normalfall ständig mit Energie versorgt. Es ist ggfs. durch die Sicherung SS abgesichert bzw. kann durch den Schalter SCH abgeschaltet werden.

Vorteilhafterweise kann der Schalter SCH / Sch so ausgeführt sein, dass der Schalter nur dann geöffnet werden kann, wenn sich die Kontakte im geöffneten Zustand befinden. Dies erhöht die Sicherheit des Gerätes, da die Elektronik (insbesondere die Steuerungseinheit) nicht bei geschlossenen Kontakten abgeschaltet werden kann.

Die Sicherung SS hat nicht nur den Zweck, die Energieversorgung mittels des Netzteils NT abzusichern, sondern soll auch insbesondere im Falle eines zweiteiligen Aufbaus (siehe Figur 2) den "elektronischen" ersten Teil EPART bzw. dessen insbesondere gesamte Einheiten absichern (wie speziell Steuerungseinheit, elektronische Unterbrechungseinheit, Spannungssensor(en), Stromsensor, ggfs. Messimpedanz, etc.).

Alternativ kann die Messimpedanz ZM über die Sicherung SS mit dem netzseitigen Neutralleiteranschluss NG verbunden sein. Damit kann vorteilhaft eine dreipolige Elektronikeinheit bzw. ein elektronischer erster Teil EPART (Figur 2) realisiert werden, beispielsweise als Modul, das drei Anschlüsse hinsichtlich des Niederspannungsstromkreises aufweist, einen Neutralleiteranschluss und zwei Phasenleiteranschlüsse. Der elektronische erste Teil EPART kann weitere Anschlüsse aufweisen, insbesondere für Steuer- oder Meßinformationen, wie für ein Freigabesignal Enable / enable, Öffnungssignal OEF, Postionsinformation (von der Positionseinheit POS) oder/und Differenzstromsignal vom Differenzstromsensor ZCT.

Die Elektronikeinheit bzw. elektronischer erster Teil EPART (Figur 2) weist beispielsweise die elektronische Unterbrechungseinheit EU, die Steuerungseinheit SE, die Energieversorgung NT (insbesondere inklusive Sicherung SS), die Stromsensoreinheit SI, optional die erste Spannungssensoreinheit SU1 oder/und optional die zweite Spannungssensoreinheit SU2 auf.

Bezüglich der drei Anschlüsse hinsichtlich des Niederspannungsstromkreises des elektronischen ersten Teils EPART besteht damit der Vorteil, dass nur zwei Phasenleiteranschlüsse eine hohe Stromtragfähigkeit (mehrere Ampere, um den Laststrom zu führen) aufweisen müssen und der Neutralleiteranschluss nur eine (im Vergleich) geringe Stromtragfähigkeit (beispielsweise kleiner als 1 A, wenige mA - in Abhängigkeit vom Energiebedarf der Steuerungseinheit) aufweisen muss. Dies vereinfacht die Konstruktion und erhöht die Sicherheit des Gerätes, da bei einem Fehler im elektronischen ersten Teil EPART kein großer Kurzschlussstrom über diese Verbindung fließen kann.

Der Niederspannungsstromkreis kann ein Dreiphasenwechselstromkreis sein, mit einem Neutralleiter und drei Phasenleitern. Das Schutzschaltgerät kann hierfür als dreiphasige Variante ausgestaltet sein und beispielsweise weitere netzseitige und lastseitige Phasenleiteranschlüsse aufweisen. Zwischen den weiteren netzseitigen und lastseitigen Phasenleiteranschlüssen sind in analoger Weise jeweils erfindungsgemäße elektronische Unterbrechungseinheiten und Kontakte der mechanischen Trennkontakteinheit vorgesehen, ebenso Stromsensoreinheiten. Ferner können Spannungsermittlungen (z.B**.** durch erste Spannungssensoreinheiten) vorgesehen sein.

Mit hochohmig ist ein Zustand gemeint, bei dem nur noch ein Strom vernachlässigbarer Größe fließt. Insbesondere sind mit hochohmig Widerstandswerte von größer als 1 Kiloohm, besser größer als 10 Kiloohm, 100 Kiloohm, 1 Megaohm, 10 Megaohm, 100 Megaohm, 1 Gigaohm oder größer gemeint.

Mit niederohmig ist ein Zustand gemeint, bei dem der auf dem Schutzschaltgerät angegebene Stromwert fließen könnte. Insbesondere sind mit niederohmig Widerstandswerte gemeint, die kleiner als 10 Ohm, besser kleiner als 1 Ohm, 100 Milliohm, 10 Milliohm, 1 Milliohm oder kleiner sind.

Figur 2 zeigt eine Darstellung gemäß Figur 1, mit dem Unterschied, dass das Schutzschaltgerät zweiteilig aufgebaut ist. Es enthält einen elektronischen ersten Teil EPART, beispielsweise auf einer Leiterplatte / Printed Circuit Board.

Der erste Teil EPART kann die Steuerungseinheit SE, die erste Spannungssensoreinheit SU1, die zweite Spannungssensoreinheit SU2, die Stromsensoreinheit SI, die elektronische Unterbrechungseinheit EU, die Energieversorgung NT, aufweisen. Ferner kann der erste Teil die Schmelzsicherung SS, einen Schalter SCH, die Meßimpedanz ZM, einen Temperatursensor TEM (insbesondere für die elektronische Unterbrechungseinheit EU), eine Kommunikationseinheit COM, eine Anzeigeeinheit AE, sowie als Variante eine Positionssensoreinheit POS aufweisen.

Der elektronische erste Teil EPART weist nur drei Anschlüsse zum Niederspannungsstromkreis auf:
- den netzseitigen Phasenleiter Anschluss LG als ersten Anschluss,
- einen (zweiten) Anschluss für den bzw. zum netzseitigen Phasenleiteranschlusspunkt APLG der mechanischen Trennkontakteinheit MK,
- einen dritten Anschluss EN für eine Verbindung zum netzseitigen Neutralleiteranschluss NG.

Die beiden Anschlüsse: zum netzseitigen Phasenleiter Anschluss LG und für den bzw. zum netzseitigen Phasenleiteranschlusspunkt APLG weisen eine hohe Stromtragfähigkeit auf, z.B. mehrere Ampere, größer als 10A / 16 A - anhängig von Nennstrom bzw. Bemessungsstrom des Niederspannungsstromkreises, insbesondere um den Laststrom auch im Kurzschluss oder Überlastfall zu tragen.

Der dritte Anschluss EN für die Verbindung zum netzseitigen Neutralleiteranschluss NG weist eine (im Vergleich) geringe Stromtragfähigkeit auf, z.B. kleiner als 1A, wenige mA - in Abhängigkeit vom Energiebedarf der versorgten Einheiten, speziell im elektronischen ersten Teil EPART. Der dritte Anschluss EN ist mit einer geringen Stromtragfähigkeit ausgeführt, um das Netzteil mit Strom zu versorgen und um eine Spannungsmessung zwischen dem Phasenleiter und Neutralleiter des Niederspannungsstromkreises. Insbesondere ist dieser dritte Anschluss EN über eine Sicherung SS abgesichert. Dies kann durch eine Schmelzsicherung oder eine kostengünstige Leiterbahn-Sicherung (dünne Leiterbahn mit entsprechender Länge und Dicke auf der Leiterplatte) realisiert werden. Dies hat den besonderen Vorteil, dass durch die geringere Stromtragfähigkeit in dieser Leitung bzw. an diesem dritten Anschluss EN die Sicherheit gegen einen innerhalb des elektronischen ersten Teils (EPART) (bzw. (elektronischen) Einheiten) auftretenden Kurzschluss, z.B. auf Seiten des Netzteils bzw. der Steuerungseinheit, verbessert wird.

Das heißt, beim Ausfall oder Versagen einer elektronischen Komponente einer Einheit innerhalb des elektronischen ersten Teils EPART kann kein gefährlicher Kurzschlussstrom entstehen (gespeist von den netzseitigen Anschlüssen LG, NG), der zu einem Brand im Gerät führen könnte.

Dieser Kurzschlussstrom wird vom Netz über die netzseitigen Anschlüssen gespeist. Ein vorgelagerter Schutzschalter weist häufig einen viel höheren Auslösestrom auf und speist parallel vorgesehene Niederspannungsstromkreise. Bei einem Fehler im Schutzschaltgerät (das Schutzschaltgerät des geschützten Niederspannungsstromkreis) und auslösen des vorgelagerten Schutzschalters würden somit auch fehlerfreie parallele Stromkreise abgeschaltet werden, was somit vermieden wird.

Die Kommunikationseinheit COM kann insbesondere eine drahtlose Kommunikationseinheit sein.

Das Schutzschaltgerät enthält einen, insbesondere mechanischen, zweiten Teil MPART. Der zweite Teil MPART kann die mechanische Trennkontakteinheit MK, die Handhabe HH, eine Freigabeeinheit FG aufweisen. Ferner kann der zweite Teil eine Positionseinheit POS, zur Meldung der Position der Kontakte der mechanischen Trennkontakte Einheit MK an die Steuerungseinheit, sowie die (Neutralleiter-)Verbindung(en) aufweisen. Weiterhin kann ein Differenzstromsensor ZCT, wie ein Summenstromwandler, wie er beispielsweise aus klassischen Fehlerstromschutzschalter bekannt ist, vorgesehen sein.

Es können weitere, nicht näher bezeichnete, Einheiten vorgesehen sein.

Durch die Zweiteilung lässt sich vorteilhaft ein erfindungsgemäßes kompaktes Schutzschaltgerät mit einer vereinfachten Konstruktion realisieren.

Die Freigabeeinheit/Freigabefunktion FG bewirkt eine Freigabe der Betätigung der Kontakte der mechanischen Trennkontakteinheit durch die Handhabe HH, wenn ein Freigabesignal enable vorliegt. D.h. ein Schließen der Kontakte KKL, KKN durch die Handhabe ist erst bei Vorliegen des Freigabesignals enable (von der Steuerungseinheit SE) möglich. Andernfalls ist ein Schließen nicht möglich (Dauerrutsche der Handhabe HH). Die Kontakte bleiben in der geöffneten Stellung / Schaltzustand. Ferner kann die Freigabeeinheit FG ein Öffnen der Kontakte bewirken (zweite Funktion der Freigabeeinheit FG), wenn ein Öffnungssignal OEF (von der Steuerungseinheit SE) vorliegt. Die Freigabeeinheit/Freigabefunktion FG agiert dann als Auslöseeinheit zum Öffnen der Kontakte der mechanischen Trennkontakteinheit MK.

Der Strompfad über die in Serie geschaltete mechanische Trennkontakteinheit MK und die einpolige elektronische Unterbrechungseinheit EU bildet, bei Anordnung im Phasenleiter gemäß Figur 1, einen Phasenleiterpfad, d.h. einen Pfad für den Phasenleiter durch das Schutzschaltgerät SG (im inneren des Gehäuses). Der Neutralleiter wird nur über die mechanische Trennkontakteinheit MK geführt, er ist dann ein Neutralleiterpfad, d.h. ein Pfad für den Neutralleiter durch das Schutzschaltgerät SG (im inneren des Gehäuses).

Tritt ein Fehlerfall in der vorhandenen Elektronik (Steuerungseinheit oder/und elektronische Unterbrechungseinheit) auf, erkennt das Schutzschaltgerät den Fehler und schaltet das Gerät in einen sicheren Zustand.
a) Der Fehler in der Elektronik wird detektiert.
b) Das Gerät schaltet den Leistungshalbleiter aus (hochohmig).
c) Das Gerät öffnet den mechanischen Trennkontakt. Das Schaltschloss ist in einen Aus-Zustand und ein Einschalten über die mechanische Betätigung / Handhabe ist nicht möglich.
d) Der Fehlerfall wird über die Kommunikationseinheit COM gemeldet.

Erfindungsgemäß wird eine neue sinnvolle Anordnung aller benötigter Komponenten für ein Schutzschaltgerät vorgeschlagen.

## Patentansprüche

1. Schutzschaltgerät (SG) zum Schutz eines elektrischen Niederspannungswechselstromkreises aufweisend:
- ein Gehäuse (GEH) mit netzseitigen Anschlüssen und lastseitigen Anschlüssen für den Niederspannungswechselstromkreis,
- eine mechanische Trennkontakteinheit (MK), die in Serie mit einer elektronischen Unterbrechungseinheit (EU) geschaltet ist, wobei die mechanische Trennkontakteinheit den lastseitigen Anschlüssen und die elektronische Unterbrechungseinheit (EU) den netzseitigen Anschlüssen zugeordnet ist,
- dass die mechanische Trennkontakteinheit (MK) durch ein Öffnen von Kontakten zur Vermeidung eines Stromflusses oder ein Schließen der Kontakte für einen Stromfluss im Niederspannungswechselstromkreis schaltbar ist,
- dass die elektronische Unterbrechungseinheit (EU) durch halbleiterbasierte Schaltelemente in einen hochohmigen Zustand der Schaltelemente zur Vermeidung eines Stromflusses oder einen niederohmigen Zustand der Schaltelemente zum Stromfluss im Niederspannungswechselstromkreis schaltbar ist,
- einer Stromsensoreinheit (SI), zur Ermittlung der Höhe des Stromes des Niederspannungswechselstromkreises,
- einer Steuerungseinheit (SE), die mit der Stromsensoreinheit (SI), der mechanischen Trennkontakteinheit (MK) und der elektronischen Unterbrechungseinheit (EU) verbunden ist, wobei bei Überschreitung von Strom- oder/und Strom-Zeitgrenzwerten eine Vermeidung eines Stromflusses des Niederspannungswechselstromkreises initiiert wird,
- dass die netzseitigen Anschlüsse einen netzseitigen Neutralleiteranschluss (NG) und einen netzseitigen Phasenleiteranschluss (LG) umfassen,
dass die lastseitigen Anschlüsse einen lastseitigen Neutralleiteranschluss (NL) und einen lastseitigen Phasenleiteranschluss (LL) umfassen.

2. Schutzschaltgerät (SG) nach Patentanspruch 1,
**dadurch gekennzeichnet,**
**dass** der lastseitige Neutralleiteranschluss (NL) und der lastseitigen Phasenleiteranschluss (LL), insbesondere ausschließlich, mit der mechanischen Trennkontakteinheit (MK) verbunden ist,
so dass bei geöffneten Kontakten der mechanischen Trennkontakteinheit (MK) die lastseitigen Anschlüsse (Load) galvanische getrennt von den anderen unter Spannung stehenden Einheiten des Schutzschaltgerätes und den netzseitigen Anschlüssen (Grid) sind.

3. Schutzschaltgerät (SG) nach Patentanspruch 2,
**dadurch gekennzeichnet,**
**dass** die elektronische Unterbrechungseinheit (EU) eine einpolige elektronische Unterbrechungseinheit (EU) ist, die einerseits mit dem netzseitigen Phasenleiteranschluss verbunden ist.

4. Schutzschaltgerät (SG) nach einem der vorhergehenden Patentansprüche,
**dadurch gekennzeichnet,**
**dass** ein Netzteil (NT) vorgesehen ist, das mit den netzseitigen Anschlüssen verbunden ist bzw. verbindbar ist,
**dass** das Netzteil (NT) mit der Steuerungseinheit (SE) verbunden ist, um eine Energieversorgung zur Verfügung zu stellen.

5. Schutzschaltgerät (SG) nach einem der vorhergehenden Patentansprüche,
**dadurch gekennzeichnet,**
**dass** die mechanische Trennkontakteinheit eine Handhabe zum manuellen Öffnen und Schließen der Kontakte aufweist, insbesondere dass die Handhabe eine Stellung der Kontakte aufweist.

6. Schutzschaltgerät (SG) nach Patentanspruch 5, **dadurch gekennzeichnet,**
**dass** die mechanische Trennkontakteinheit (MK) derart ausgestaltet ist, dass nur bei Anliegen eines Freigabesignals, insbesondere von der Steuerungseinheit, ein Schließen der Kontakte durch eine Handhabe möglich ist.

7. Schutzschaltgerät (SG) nach einem der vorhergehenden Patentansprüche,
**dadurch gekennzeichnet,**
**dass** die mechanische Trennkontakteinheit (MK) derart ausgestaltet ist, dass die Kontakte von der Steuerungseinheit (SE) geöffnet, aber nicht geschlossen werden können.

8. Schutzschaltgerät (SG) nach einem der vorhergehenden Patentansprüche,
**dadurch gekennzeichnet,**
**dass** die mechanische Trennkontakteinheit derart ausgestaltet ist, dass eine Positionsinformation über den geschlossenen oder geöffneten Zustand der Kontakte zur Verfügung steht, insbesondere das die Positionsinformation von der Steuerungseinheit erfasst wird.

9. Schutzschaltgerät (SG) nach einem der vorhergehenden Patentansprüche,
**dadurch gekennzeichnet,**
**dass** eine erste Spannungssensoreinheit vorgesehen ist, zur Ermittlung der Höhe der Spannung über den Anschlüssen der elektronischen Unterbrechungseinheit (EU) eines Strompfades.

10. Schutzschaltgerät (SG) nach einem der vorhergehenden Patentansprüche,
**dadurch gekennzeichnet,**
**dass** eine zweite Spannungssensoreinheit vorgesehen ist, zur Ermittlung der Höhe der Spannung an den netzseitigen Anschlüssen, insbesondere zwischen netzseitigen Neutralleiteranschluss und netzseitigen Phasenleiteranschluss.

11. Schutzschaltgerät (SG) nach einem der vorhergehenden Patentansprüche,
**dadurch gekennzeichnet,**
**dass** eine mit der Steuerungseinheit (SE) verbundene Anzeigeeinheit (AE) vorgesehen ist, insbesondere zur Anzeige des nieder- oder hochohmigen Zustandes der elektronischen Unterbrechungseinheit EU.

12. Schutzschaltgerät (SG) nach einem der vorhergehenden Patentansprüche,
**dadurch gekennzeichnet,**
**dass** eine mit der Steuerungseinheit (SE) verbundene Kommunikationseinheit (COM) vorgesehen ist,
insbesondere dass die Kommunikationseinheit (COM) eine drahtlose Kommunikationseinheit ist.

13. Schutzschaltgerät (SG) nach einem der vorhergehenden Patentansprüche,
**dadurch gekennzeichnet,**
**dass** eine Temperatursensoreinheit vorgesehen ist, insbesondere zur Ermittlung der Temperatur der elektronischen Unterbrechungseinheit.

14. Schutzschaltgerät (SG) nach einem der vorhergehenden Patentansprüche,
**dadurch gekennzeichnet,**
**dass** ein mit der Steuerungseinheit (SE) verbundener Differenzstromsensor (ZCT) vorgesehen ist, zur Ermittlung eines Differenzstromes der Leiter des Niederspannungswechselstromkreises.

15. Schutzschaltgerät (SG) nach einem der vorhergehenden Patentansprüche,
**dadurch gekennzeichnet,**
**dass** die Stromsensoreinheit (SI) strompfadseitig zwischen netzseitigen Phasenleiteranschluss und lastseitigen Phasenleiteranschluss vorgesehen ist.

16. Schutzschaltgerät (SG) nach einem der vorhergehenden Patentansprüche,
**dadurch gekennzeichnet,**
**dass** das Schutzschaltgerät zwei Teile aufweist, einen elektronischen ersten Teil (EPART) und einen mechanischen zweiten Teil (MPART),
**dass** der elektronische erste Teil Leiterplatten aufweist, insbesondere eine oder zwei Leiterplatten aufweist,
auf denen insbesondere die Steuerungseinheit, die zweite Spannungssensoreinheit, die Stromsensoreinheit, das Netzteil, die elektronische Unterbrechungseinheit, die Temperatursensoreinheit und gegebenenfalls die erste Spannungssensoreinheit oder/und die Messimpedanz vorgesehen sind.

17. Schutzschaltgerät (SG) nach Patentanspruch 16,
**dadurch gekennzeichnet,**
**dass** der elektronische erste Teil nur drei Anschüsse des Niederspannungswechselstromkreises aufweist,
einen ersten Anschluss zum netzseitigen Phasenleiteranschluss (LG),
einen zweiten Anschluss zum netzseitigen Phasenleiteranschlusspunkt (APLG) der mechanischen Trennkontakteinheit (MK),
einen dritten Anschluss (EN) für eine Verbindung zum netzseitigen Neutralleiteranschluss (NG).

18. Schutzschaltgerät (SG) nach Patentanspruch 17,
**dadurch gekennzeichnet,**
**dass** der erste und zweite Anschluss eine höhere Stromtragfähigkeit aufweisen, als der dritte Anschluss.

19. Schutzschaltgerät (SG) nach einem der vorhergehenden Patentansprüche,
**dadurch gekennzeichnet,**
**dass** die Verbindung zum dritten Anschluss (EN) eine Sicherung (SS) oder/und einen Schalter (SCH) aufweist.

20. Schutzschaltgerät (SG) nach einem der vorhergehenden Patentansprüche,
**dadurch gekennzeichnet,**
**dass** der Niederspannungswechselstromkreis ein Dreiphasenwechselstromkreis ist und das Schutzschaltgerät weitere netzseitige und lastseitige Phasenleiteranschlüsse aufweist, zwischen denen jeweils eine Serienschaltung einer elektronischen Unterbrechungseinheit, einer Stromsensoreinheit und eines Kontaktes der mechanischen Trennkontakteinheit vorgesehen ist.

21. Schutzschaltgerät (SG) nach einem der vorhergehenden Patentansprüche,
**dadurch gekennzeichnet,**
**dass** bei geschlossenen Kontakten der mechanischen Trennkontakteinheit und niederohmiger Unterbrechungseinheit und
- bei einem ermittelten Strom, der einen ersten Stromwert überschreitet, insbesondere dass der erste Stromwert für eine erste Zeitgrenze überschritten wird, die elektronische Unterbrechungseinheit hochohmig wird und die mechanische Trennkontakteinheit (MK) geschlossen bleibt,
- bei einem ermittelten Strom, der einen zweiten Stromwert für eine zweite Zeitgrenze überschreitet, die elektronische Unterbrechungseinheit hochohmig wird und die mechanische Trennkontakteinheit (MK) geöffnet wird,
- bei einem ermittelten Strom, der einen dritten Stromwert überschreitet, die elektronische Unterbrechungseinheit hochohmig wird und die mechanische Trennkontakteinheit (MK) geöffnet wird.

22. Schutzschaltgerät (SG) nach einem der vorhergehenden Patentansprüche,
**dadurch gekennzeichnet,**
**dass** die Steuerungseinheit (SE) einen Mikrocontroller aufweist.

## Claims

1. Circuit breaker device (SG) for protecting an electrical low-voltage AC circuit, comprising:
- a housing (GEH) having grid-side connections and load-side connections for the low-voltage AC circuit,
- a mechanical isolating contact unit (MK) connected in series with an electronic interruption unit (EU), wherein the mechanical isolating contact unit is assigned to the load-side connections and the electronic interruption unit (EU) is assigned to the grid-side connections,
- wherein the mechanical isolating contact unit (MK) is able to be switched by opening contacts in order to avoid a current flow or closing the contacts for a current flow in the low-voltage AC circuit,
- wherein the electronic interruption unit (EU) is able to be switched by semiconductor-based switching elements to a high-impedance state of the switching elements to avoid a current flow, or to a low-impedance state of the switching elements to allow the current flow in the low-voltage AC circuit,
- a current sensor unit (SI) for determining the level of the current in the low-voltage AC circuit,
- a control unit (SE) connected to the current sensor unit (SI), the mechanical isolating contact unit (MK) and the electronic interruption unit (EU), wherein, in the event of current or/and current-time limit values being exceeded, avoidance of a current flow in the low-voltage AC circuit is initiated,
- wherein the grid-side connections comprise a grid-side neutral conductor connection (NG) and a grid-side phase conductor connection (LG),
wherein the load-side connections comprise a load-side neutral conductor connection (NL) and a load-side phase conductor connection (LL).

2. Circuit breaker device (SG) according to Claim 1, **characterized**
**in that** the load-side neutral conductor connection (NL) and the load-side phase conductor connection (LL) are connected, in particular exclusively, to the mechanical isolating contact unit (MK),
such that, when contacts of the mechanical isolating contact unit (MK) are open, the load-side connections (Load) are galvanically isolated from the other live units of the circuit breaker device and the grid-side connections (Grid).

3. Circuit breaker device (SG) according to Claim 2, **characterized**
**in that** the electronic interruption unit (EU) is a single-pole electronic interruption unit (EU) connected on one side to the grid-side phase conductor connection.

4. Circuit breaker device (SG) according to one of the preceding claims,
**characterized**
**in that** provision is made for a power supply unit (NT) that is connected or able to be connected to the grid-side connections, in that the power supply unit (NT) is connected to the control unit (SE) in order to provide a power supply.

5. Circuit breaker device (SG) according to one of the preceding claims,
**characterized**
**in that** the mechanical isolating contact unit has a handle for manually opening and closing the contacts, in particular in that the handle has a position of the contacts.

6. Circuit breaker device (SG) according to Claim 5, **characterized**
**in that** the mechanical isolating contact unit (MK) is configured such that it is possible to close the contacts using a handle only when an enable signal is present, in particular from the control unit.

7. Circuit breaker device (SG) according to one of the preceding claims,
**characterized**
**in that** the mechanical isolating contact unit (MK) is configured such that the contacts are able be opened, but not closed, by the control unit (SE).

8. Circuit breaker device (SG) according to one of the preceding claims,
**characterized**
**in that** the mechanical isolating contact unit is configured such that position information about the closed or open state of the contacts is available, in particular in that the position information is acquired by the control unit.

9. Circuit breaker device (SG) according to one of the preceding claims,
**characterized**
**in that** provision is made for a first voltage sensor unit for determining the level of the voltage across the connections of the electronic interruption unit (EU) of a current path.

10. Circuit breaker device (SG) according to one of the preceding claims,
**characterized**
**in that** provision is made for a second voltage sensor unit for determining the level of the voltage at the grid-side connections, in particular between the grid-side neutral conductor connection and the grid-side phase conductor connection.

11. Circuit breaker device (SG) according to one of the preceding claims,
**characterized**
**in that** provision is made for a display unit (AE) connected to the control unit (SE), in particular for displaying the low-impedance or high-impedance state of the electronic interruption unit (EU).

12. Circuit breaker device (SG) according to one of the preceding claims,
**characterized**
**in that** provision is made for a communication unit (COM) connected to the control unit (SE),
in particular in that the communication unit (COM) is a wireless communication unit.

13. Circuit breaker device (SG) according to one of the preceding claims,
**characterized**
**in that** provision is made for a temperature sensor unit, in particular for determining the temperature of the electronic interruption unit.

14. Circuit breaker device (SG) according to one of the preceding claims,
**characterized**
**in that** provision is made for a differential current sensor (ZCT) connected to the control unit (SE), for determining a differential current of the conductors of the low-voltage AC circuit.

15. Circuit breaker device (SG) according to one of the preceding claims,
**characterized**
**in that** the current sensor unit (SI) is provided in the current path between the grid-side phase conductor connection and the load-side phase conductor connection.

16. Circuit breaker device (SG) according to one of the preceding claims,
**characterized**
**in that** the circuit breaker device has two parts, an electronic first part (EPART) and a mechanical second part (MPART),
**in that** the electronic first part has printed circuit boards, in particular has one or two printed circuit boards,
on which in particular the control unit, the second voltage sensor unit, the current sensor unit, the power supply unit, the electronic interruption unit, the temperature sensor unit and where applicable the first voltage sensor unit or/and the measurement impedance are provided.

17. Circuit breaker device (SG) according to Claim 16, **characterized**
**in that** the electronic first part has only three connections of the low-voltage AC circuit,
a first connection to the grid-side phase conductor connection (LG),
a second connection to the grid-side phase conductor connection point (APLG) of the mechanical isolating contact unit (MK),
a third connection (EN) for a connection to the grid-side neutral conductor connection (NG).

18. Circuit breaker device (SG) according to Claim 17, **characterized**
**in that** the first and second connection have a higher current-carrying capacity than the third connection.

19. Circuit breaker device (SG) according to one of the preceding claims,
**characterized**
**in that** the connection to the third connection (EN) has a fuse (SS) or/and a switch (SCH).

20. Circuit breaker device (SG) according to one of the preceding claims,
**characterized**
**in that** the low-voltage AC circuit is a three-phase AC circuit and the circuit breaker device has further grid-side and load-side phase conductor connections, between each of which provision is made for a series circuit of an electronic interruption unit, a current sensor unit and a contact of the mechanical isolating contact unit.

21. Circuit breaker device (SG) according to one of the preceding claims,
**characterized**
**in that**, when contacts of the mechanical isolating contact unit are closed and the interruption unit is in the low-impedance state and
- when a current that exceeds a first current value is determined, in particular when the first current value is exceeded for a first time limit, the electronic interruption unit changes to the high-impedance state and the mechanical isolating contact unit (MK) remains closed,
- when a current that exceeds a second current value for a second time limit is determined, the electronic interruption unit changes to the high-impedance state and the mechanical isolating contact unit (MK) is opened,
- when a current that exceeds a third current value is determined, the electronic interruption unit changes to the high-impedance state and the mechanical isolating contact unit (MK) is opened.

22. Circuit breaker device (SG) according to one of the preceding claims,
**characterized**
**in that** the control unit (SE) has a microcontroller.

## Revendications

1. Disjoncteur (SG) destiné à la protection d'un circuit électrique à courant alternatif basse tension, présentant :
- un boîtier (GEH) avec des bornes côté réseau et des bornes côté charge pour le circuit à courant alternatif basse tension,
- une unité de contact de coupure mécanique (MK) montée en série avec une unité d'interruption électronique (EU), dans lequel l'unité de contact de coupure mécanique est associée aux bornes côté charge et l'unité d'interruption électronique (EU) aux bornes côté réseau,
- de sorte que l'unité de contact de coupure mécanique (MK) peut être actionnée soit par l'ouverture des contacts pour empêcher un passage du courant, soit par la fermeture des contacts pour permettre un passage du courant dans le circuit à courant alternatif basse tension,
- de sorte que l'unité d'interruption électronique (EU) peut être commutée, à l'aide d'éléments de commutation à semiconducteurs, dans un état à haute impédance des éléments de commutation afin d'empêcher un passage du courant, ou dans un état à faible impédance des éléments de commutation afin de permettre un passage du courant dans le circuit à courant alternatif basse tension,
- une unité de détection de courant (SI) destinée à déterminer l'intensité du courant du circuit à courant alternatif basse tension,
- une unité de commande (SE) reliée à l'unité de détection de courant (SI), à l'unité de contact de coupure mécanique (MK) et à l'unité d'interruption électronique (EU), dans laquelle, en cas de dépassement des valeurs limites de courant et/ou de courant-temps, un mécanisme visant à empêcher un passage du courant dans le circuit à courant alternatif basse tension est initié,
- de sorte que les bornes côté réseau comprennent une borne au conducteur neutre côté réseau (NG) et une borne au conducteur de phase côté réseau (LG),
de sorte que les bornes côté charge comprennent une borne du conducteur neutre côté charge (NL) et une borne du conducteur de phase côté charge (LL).

2. Disjoncteur (SG) selon la revendication 1,
**caractérisé en ce que**
la borne du conducteur neutre côté charge (NL) et la borne du conducteur de phase côté charge (LL) sont reliées, en particulier exclusivement, à l'unité de contact de coupure mécanique (MK), de sorte que, lorsque les contacts de l'unité de contact de coupure mécanique (MK) sont ouverts, les bornes côté charge (Load) sont isolées galvaniquement des autres unités sous tension du disjoncteur et des bornes côté réseau (Grid).

3. Disjoncteur (SG) selon la revendication 2,
**caractérisé en ce que**
l'unité d'interruption électronique (EU) est une unité d'interruption électronique (EU) unipolaire qui est reliée, d'une part, à la borne du conducteur de phase côté réseau.

4. Disjoncteur (SG) selon l'une des revendications précédentes,
**caractérisé en ce que**
un bloc d'alimentation (NT) qui est relié et/ou peut être relié aux bornes réseau est prévu,
le bloc d'alimentation (NT) est relié à l'unité de commande (SE) afin de mettre à disposition une alimentation électrique.

5. Disjoncteur (SG) selon l'une des revendications précédentes,
**caractérisé en ce que**
l'unité de contact de coupure mécanique présente une poignée permettant d'ouvrir et de fermer manuellement les contacts, et en particulier la poignée permet de positionner les contacts.

6. Disjoncteur (SG) selon la revendication 5,
**caractérisé en ce que**
l'unité de contact de coupure mécanique (MK) est conçue de telle sorte qu'une fermeture des contacts à l'aide d'une poignée n'est possible qu'en présence d'un signal d'autorisation, provenant en particulier de l'unité de commande.

7. Disjoncteur (SG) selon l'une des revendications précédentes,
**caractérisé en ce que**
l'unité de contact de coupure mécanique (MK) est conçue de telle sorte que les contacts peuvent être ouverts par l'unité de commande (SE), mais ne peuvent pas être fermés.

8. Disjoncteur (SG) selon l'une des revendications précédentes,
**caractérisé en ce que**
l'unité de contact de coupure mécanique est conçue de telle sorte qu'une information de position indiquant si les contacts sont fermés ou ouverts est disponible, et en particulier que cette information de position est saisie par l'unité de commande.

9. Disjoncteur (SG) selon l'une des revendications précédentes,
**caractérisé en ce que**
une première unité de détection de tension est prévue pour déterminer le niveau de tension aux bornes de l'unité d'interruption électronique (EU) d'un circuit électrique.

10. Disjoncteur (SG) selon l'une des revendications précédentes,
**caractérisé en ce que**
une deuxième unité de détection de tension est prévue pour déterminer le niveau de tension aux bornes côté réseau, en particulier entre la borne du conducteur neutre côté réseau et la borne du conducteur de phase côté réseau.

11. Disjoncteur (SG) selon l'une des revendications précédentes,
**caractérisé en ce que**
une unité d'affichage (AE) reliée à l'unité de commande (SE) est prévue, en particulier pour indiquer l'état à faible ou à haute impédance de l'unité d'interruption électronique (EU).

12. Disjoncteur (SG) selon l'une des revendications précédentes,
**caractérisé en ce que**
une unité de communication (COM) reliée à l'unité de commande (SE) est prévue, en particulier l'unité de communication (COM) est une unité de communication sans fil.

13. Disjoncteur (SG) selon l'une des revendications précédentes,
**caractérisé en ce que**
un capteur de température est prévu, en particulier pour déterminer la température de l'unité d'interruption électronique.

14. Disjoncteur (SG) selon l'une des revendications précédentes,
**caractérisé en ce que**
un capteur de courant différentiel (ZCT) relié à l'unité de commande (SE) est prévu pour déterminer un courant différentiel des conducteurs du circuit à courant alternatif basse tension.

15. Disjoncteur (SG) selon l'une des revendications précédentes,
**caractérisé en ce que**
l'unité de détection de courant (SI) est prévue, côté circuit de courant, entre la borne du conducteur de phase côté réseau et la borne du conducteur de phase côté charge.

16. Disjoncteur (SG) selon l'une des revendications précédentes,
**caractérisé en ce que**
le disjoncteur présente deux parties, une première partie électronique (EPART) et une deuxième partie mécanique (MPART), la première partie électronique présente des circuits imprimés, en particulier un ou deux circuits imprimés, sur lesquels sont prévus en particulier l'unité de commande, la deuxième unité de détection de tension, l'unité de détection de courant, le bloc d'alimentation, l'unité d'interruption électronique, l'unité de détection de température et, le cas échéant, la première unité de détection de tension et/ou l'impédance de mesure.

17. Disjoncteur (SG) selon la revendication 16,
**caractérisé en ce que**
la première partie électronique présente seulement trois bornes du circuit à courant alternatif basse tension,
une première borne reliée à la borne du conducteur de phase côté réseau (LG),
une deuxième borne reliée au point de raccordement du conducteur de phase côté réseau (APLG) de l'unité de contact de coupure mécanique (MK),
une troisième borne (EN) pour une connexion à la borne du conducteur neutre côté réseau (NG).

18. Disjoncteur (SG) selon la revendication 17,
**caractérisé en ce que**
les première et deuxième bornes présentent une capacité de transport de courant supérieure à celle de la troisième borne.

19. Disjoncteur (SG) selon l'une des revendications précédentes,
**caractérisé en ce que**
la connexion à la troisième borne (EN) présente un fusible (SS) et/ou un interrupteur (SCH).

20. Disjoncteur (SG) selon l'une des revendications précédentes,
**caractérisé en ce que**
le circuit à courant alternatif basse tension est un circuit triphasé et le disjoncteur présente d'autres bornes de conducteurs de phase côté réseau et côté charge, entre lesquelles est prévu, dans chaque cas, un montage en série composé d'une unité d'interruption électronique, d'une unité de détection de courant et d'un contact de l'unité de contact de coupure mécanique.

21. Disjoncteur (SG) selon l'une des revendications précédentes,
**caractérisé en ce que**
lorsque les contacts de l'unité de contact de coupure mécanique sont fermés et que l'unité d'interruption à faible impédance est activée, et
- lorsqu'un courant détecté est supérieur à une première valeur de courant, en particulier lorsque cette première valeur de courant est dépassée pendant une première limite temporelle, l'unité d'interruption électronique passe en mode haute impédance et l'unité de contact de coupure mécanique (MK) reste fermée,
- lorsqu'un courant mesuré est supérieur à une deuxième valeur de courant pendant une deuxième limite temporelle, l'unité d'interruption électronique passe en mode haute impédance et l'unité de contact de coupure mécanique (MK) s'ouvre,
- lorsqu'un courant mesuré est supérieur à une troisième valeur de courant, l'unité d'interruption électronique passe en mode haute impédance et l'unité de contact de coupure mécanique (MK) s'ouvre.

22. Disjoncteur (SG) selon l'une des revendications précédentes,
**caractérisé en ce que** l'unité de commande (SE) présente un microcontrôleur.
